# EUROPEAN PATENT APPLICATION

(11) **EP 3 045 260 A1**
(43) Date of publication of application: **20.07.2016**
(21) Application number: 15200327.3
(22) Date of filing: 16.12.2015
(51) Int. Cl.: B23P 6/00, B23K 37/00, F01D 5/00, F01D 5/28, F04D 29/32

(54) **METHOD AND EQUIPMENT FOR REPAIRING A COMPONENT**

(30) Priority: 15.01.2015 GB 201500636
(71) Applicant: Rolls-Royce plc, London SW1E 6AT (GB)
(72) Inventor: Jones, Martyn Anthony, Derby, Derbyshire DE24 8BJ (GB)
(74) Representative: Rolls-Royce plc

(57) **Abstract**

There is disclosed a method of repairing a component 2 having a metal part 6, 8 adhesively bonded to a composite body 4. The method comprises thermally coupling a heatsink 14 to the metal part 6, 8 adjacent to a repair region of the metal part 6, 8 which is to be repaired; and performing a metal deposition process 60 on the metal part 6, 8 in the repair region. During the metal deposition process 60 the heatsink 14 acts to transfer thermal energy away from the metal part caused by the metal deposition process 60. There is also disclosed equipment for repairing a component 2 having a metal part 6, 8 adhesively bonded to a composite body 4.

## Description

The disclosure relates to a method and equipment for repairing a component having a metal part adhesively bonded to a composite body. In particular, although not exclusively, the disclosure relates to a method and equipment for repairing a fan blade having a leading and/or trailing metal edge adhesively bonded to a composite body.

Composite fan blades are known which comprise a composite aerofoil body and leading and trailing protective metal edges adhesively bonded to the composite aerofoil body. The composite aerofoil body is typically made from a composite material such as a glass or carbon fibre reinforced polymer (GFRP, CFRP), whilst the leading and trailing protective metal edges are typically made from titanium or steel. The leading and trailing metal edges are provided to protect the edge of the composite aerofoil body from impact damage and erosion. During use, impacts such as from bird strikes and runway debris may damage the metal edges, and over time small particulate matter may erode the metal edges, thereby changing their profile.

It is desirable to repair the leading/trailing metal edges of composite fan blades in order to extend their life. Impact damage to the metal edges, such as chips or notches, can be repaired by "dressing-out" the damaged area. This involves removing material to create a smoother profile in order reduce stress concentration areas. The metal edges can be re-profiled by using a material removal process such as abrading. Whilst these methods of repair may increase the life of the fan blade, they involve the removal of metal and so there may no longer be sufficient metal remaining after a number of repairs.

It is therefore desirable to provide an improved method and equipment for repairing a component having a metal part adhesively bonded to a composite body.

According to an aspect there is provided a method of repairing a component having a metal part attached (for example adhesively bonded) to a composite body, the method comprising: thermally coupling a heatsink to the metal part adjacent to a repair region of the metal part which is to be repaired; and performing a metal deposition process on the metal part in the repair region; wherein during the metal deposition process the heatsink acts to transfer (or dissipate) thermal energy away from the metal part caused by the metal deposition process. The use of a heatsink to transfer heat away from the metal part means that during the metal deposition process the adhesive bond and/or the resin of the composite body do not reach excessive temperatures. This allows the metal part to be repaired using a material addition process.

It should be appreciated that the order that the method steps are presented in is not limiting and the steps could be carried out in any particular order.

The heatsink may have a heatsink base having a profile corresponding to that of the metal part, and thermally coupling the heatsink to the metal part may include placing the heatsink base against the metal part. The heatsink base may comprise a recess for receiving the metal part. The recess may be in the form of a channel. The channel may have a profile corresponding to the edge of a fan blade, such as a leading edge or a trailing edge. The heatsink may be a liquid-cooled heatsink, such as a water-cooled heatsink. During the metal deposition process a cooling liquid, such as water, may be used to transfer (or dissipate) thermal energy away from the heatsink. This may increase the transfer rate of heat away from the metal part. During the metal deposition process a cooling liquid, such as water, may be pumped past the heatsink. A cooling liquid may be pumped through, over, or across the heatsink. In other embodiments other ways of causing a cooling liquid, such as water, to flow past the heatsink may be used.

The heatsink may define an opening, and with the heatsink thermally coupled to the metal part, at least a part of a repair region may be exposed through the opening. The heatsink may be thermally coupled to the metal part such that it surrounds at least a part of a repair region. The metal deposition process may be performed through the opening.

The heatsink may have one or more formations or features for promoting heat transfer (or dissipation), such as heat transfer fins.

The method may further comprise, after the metal deposition process, performing a heat treatment process on the repair region, wherein during the heat treatment process the heatsink acts to transfer (or dissipate) thermal energy away from the metal part caused by the heat treatment process. During the heat treatment process, a cooling liquid, such as water, may be used to transfer (or dissipate) thermal energy away from the heatsink. A cooling liquid, such as water, may be pumped past the heatsink during the heat treatment process. A cooling liquid may be pumped through, over, or across the heatsink. In other embodiments other ways of causing a cooling liquid, such as water, to flow past the heatsink may be used. The heat treatment process may be performed through the opening.

The component may be a blade or a vane. The metal part may be a metal leading or trailing edge or tip.

According to another aspect there is provided equipment for repairing a component having a metal part adhesively bonded to a composite body, the equipment comprising: a heatsink arranged to be thermally coupled to the metal part adjacent to a repair region of the metal part which is to be repaired; and metal deposition apparatus for performing a metal deposition process on the metal part in the repair region.

The heatsink may have a heatsink base having a profile corresponding to that of the metal part. The heatsink base may comprise a recess for receiving the metal part. The recess may be in the form of a channel. The heatsink may be a liquid-cooled heatsink.

The heatsink may define an opening which is arranged such that with the heatsink thermally coupled to the metal part, at least a part of a repair region is exposed through the opening.

The equipment may further comprise heat treatment apparatus for performing a heat treatment process on the repair region.

The disclosure also relates to a heatsink for use in the method according to any statement herein, or according to the equipment of any statement herein.

The disclosure may comprise any combination of the features and/or limitations referred to herein, except combinations of such features that are mutually exclusive.

Embodiments will now be described, by way of example, with reference to the accompanying drawings, in which:
Figure 1 schematically shows perspective views of a composite fan blade for a gas turbine engine, such as a jet engine;
Figure 2 schematically shows a cross-sectional view of the composite fan blade of Figure 1;
Figure 3 schematically shows a repair process in accordance with an embodiment of the invention;
Figure 4 schematically shows a perspective view of a heatsink according to an embodiment; and
Figure 5 schematically shows a perspective view of the heatsink of Figure 4 thermally coupled to the metal edge of the fan blade of Figure 1.

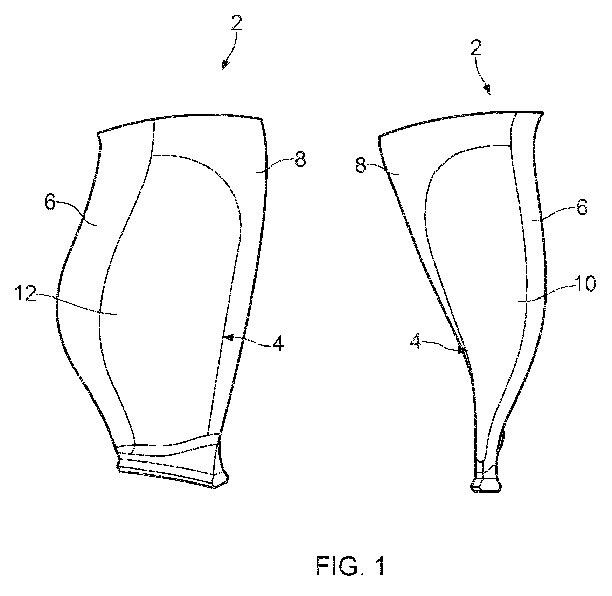

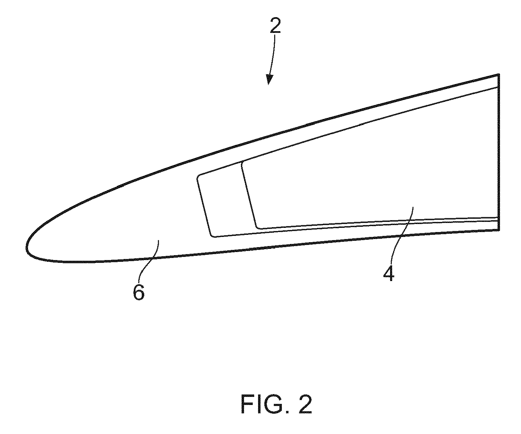

**Figures 1** and 2 show a composite fan blade 2 for a jet engine (not shown). The fan blade 2 comprises a composite aerofoil body 4 and protective leading and trailing metal edges 6, 8 which are adhesively bonded to the leading and trailing edges of the composite aerofoil body 4. The trailing metal edge 8 further extends around the tip of the composite aerofoil body 4 and is adhesively bonded to it. In other embodiments, the leading metal edge 6 may extend around the tip of the composite aerofoil body 4 instead. In yet a further embodiment a separate metal tip edge could be provided that is adhesively bonded to the composite body 4. The composite aerofoil body 4 is made from a composite material, for example, a glass or carbon fibre reinforced polymer (GFRP, CFRP). The metal leading and trailing edges 6, 8 are made from titanium. It should be appreciated that the metal edges could be made from other suitable metals such as steel. The outer surfaces of the composite aerofoil body 4 are provided with an adhesive layer that is co-cured with the composite body 4. The pressure surface is further provided with an additional elastic polyurethane layer on top of the adhesive layer. Both surfaces are coated with a polyurethane paint layer which provides a smooth aerodynamic finish, and improves the aesthetic appearance. In use, the leading metal edge 6 and the trailing metal edge 8 may become damaged from either impacts, causing chips/notches, or erosion, causing a change in the profile of the edge.

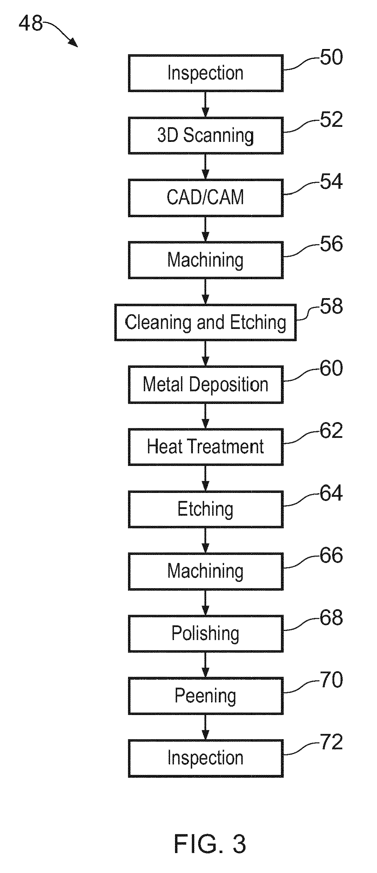

A method of repairing the leading/trailing metal edges 6, 8 of the composite fan blade 2 using a metal deposition process will now be described with reference to **Figure 3****.**

The repair process 48 is initiated by an inspection process 50 in which the leading metal edge 6 and the trailing metal edge 8 are inspected for impact damage or erosion damage. If, upon inspection, damaged is found, a 3D scan 52 is performed in which the 3D geometry of the surface of the damaged metal edge 6, 8 is mapped. This produces 3D data that is used to create a CAD/CAM program 54 for the repair process. The metal edge 6, 8 is then machined 56 in the region to be repaired, which may be a localized repair region or may be the entire length of the metal edge 6, 8 if the edge needs to be re-profiled. The machining process 56 is performed in order to provide a suitable surface geometry for a subsequent metal deposition process. A cleaning and etching process 58 is then performed which removes impurities such as oxides from the repair region. A metal deposition process 60 is then carried out on the repair region to add metal to the repair region so as to restore the metal edge 6, 8 to its original profile.

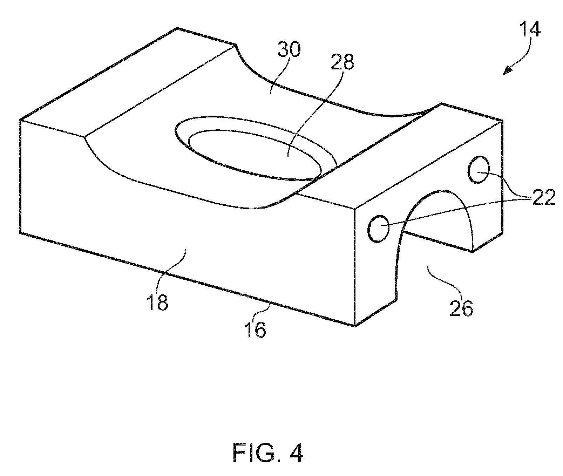

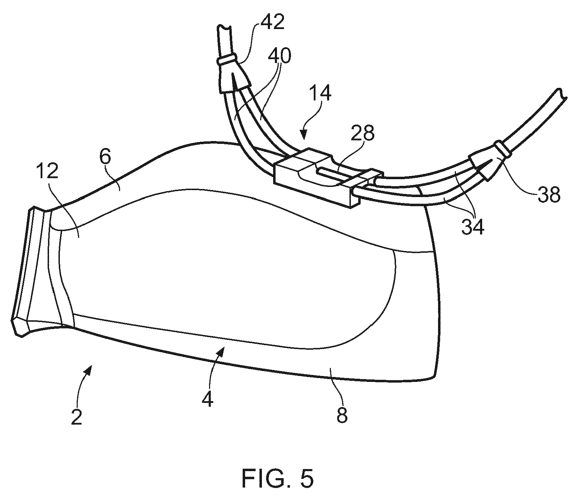

In this embodiment the metal deposition process 60 is a blown powder direct laser deposition process, in which a plurality of layers of metal are deposited on top of one another to build-up metal in the repair region. In this embodiment, the metal deposition process 60 is used to fill-in notches/chips or to re-profile the metal edge 6, 8, thus restoring the metal edge 6, 8 to its original profile. The metal deposition process 60 uses a laser power in the region of 450W, which causes the temperature of the metal edge 6, 8 to be increased. In order to prevent the temperature of the adhesive used to bond the metal edges 6, 8 to the composite body 4 reaching unacceptably high levels (which may be 120°C), a heatsink 14 is thermally coupled to the metal edge 6, 8 during the metal deposition process 60. The heatsink 14 also acts to prevent the temperature of the composite body itself reaching unacceptably high levels (which may be 80°C). Temperatures beyond these levels may cause the adhesive and/or composite material to degrade. The heatsink 14 will be described in detail below with reference to Figures 4 and 5.

Following the metal deposition process 60, the repair region (i.e. the metal deposited in the repair region) is subjected to a heat treatment process 62 in which the temperature of the repair region (i.e. the region in which the metal has been deposited) is raised to approximately 600°C for one hour. The heat treatment process 62 alleviates tensile stress within the deposited metal and the surrounding area. This improves impact resistance and prevents the interface between the original metal and the deposited metal from cracking. Due to the high temperatures involved, the heatsink 14 remains thermally coupled to the metal edge 6, 8 so as to avoid the adhesive and the composite material from being overheated. The heat treatment process 62 is followed by an etching process 64 which removes impurities from the surface of the deposited material, and there then follows a polishing process 68 which produces a smooth surface. The metal deposited in the repair region is then peened 70, which reduces the likelihood of crack propagation. In some embodiments, the peening process 70 may not be required. The metal edge 6, 8 that has been repaired is then inspected to ensure that the repair has been carried out successfully.

**Figure 4** shows a perspective view of a heatsink 14 which can be used in the repair process described above in order to assist in the dissipation or transfer of thermal energy (i.e. heat) from the metal edge 6, 8 being repaired. The use of the heatsink 14 prevents the temperature of the adhesive bonding the metal edge 6, 8 to the composite body 4 from reaching levels at which the adhesive bond would be compromised. Further, the use of the heatsink 14 prevents the temperature of the composite material of the composite body from reaching levels at which the composite material itself would be compromised. In this embodiment the heatsink 14 is a liquid-cooled heatsink and therefore during use a liquid is used to transfer thermal energy (i.e. heat) received by the heatsink away from the heatsink 14 (and therefore away from the metal edge 6, 8). The heatsink 14 is manufactured from a thermally conductive metal such as copper and has a base 16 comprising a recess in the form of an elongate channel 26. As will be described in detail below, the inner profile of the channel 26 substantially corresponds to the outer profile of the metal edge 6, 8. The heatsink 14 also comprises an opening 28 that extends through the heatsink 14 from an upper surface 30 and which opens into the channel 26. The heatsink 14 is provided with two fluid passageways, each having an inlet 22 and an outlet (not shown). The fluid passageways are located on either side of the opening 28 and extend through the heatsink 14 in the same general direction as the direction of extent of the channel 26.

As shown in **Figure 5**, in use, prior to the metal deposition process 60, the heatsink 14 is located over the metal edge 6, 8 such that the region to be repaired or restored is accessible through the opening 28. With the heatsink 14 located over the metal edge 6, 8, the base 16 is in physical contact with the metal edge 6, 8 and is therefore thermally coupled to it. The inlet ports 22 are connected to respective inlet tubes 34 which are connected together with a fluid coupling 38. The fluid coupling 38 is connected to a fluid pump (not shown) for pumping cooling fluid, such as water, through the heatsink 14. The outlet ports are connected to respective outlet tubes 40 which are connected together with a fluid coupling 42. The fluid coupling 42 is connected to a heat exchanger (not shown) which is arranged to extract heat from the cooling fluid so as to cool it. The pump may be connected to the heat exchanger so as to form a closed system.

During the metal deposition process 60 the pump is operated to pump cooling liquid, such as water, through the fluid passageways in the heatsink 14. The metal deposition process 60 is performed through the access opening 28, specifically, metal powder is deposited through the opening 28 and the laser is directed through the opening 28. Heat generated by the metal deposition process 60 is transferred away from the metal edge 6, 8 to the heatsink 14 and the flow of cooling liquid acts to transfer the heat away from the heatsink 14 to the cooling liquid. This forced cooling effect efficiently cools the metal edge 6, 8, preventing overheating of the adhesive and the composite material itself. This allows a metal deposition process 60 to be performed on a region of the fan blade which is sensitive to excessive temperatures. During the heat treatment process 62 the pump is also operated to pump cooling liquid through the heatsink 14, thereby efficiently transferring thermal energy away from the metal edge 6, 8. As for during the metal deposition process 60, this forced cooling prevents overheating of the adhesive and the composite material itself. Although the cooling liquid has been described as being water, any other suitable liquid could be used. Further, although it has been described that the cooling liquid is pumped through the heatsink 14, it may be conveyed through the heatsink 14 using any suitable means, for example under the force of gravity.

Once the repair process 48 has been completed, if there is a second region that requires repair, the heatsink 14 can be repositioned along the metal edge 6, 8 such that the second repair region is accessible through the opening 28. The repair process 48 is then repeated on this second repair region.

In the foregoing description it has been described that the metal deposition process 60 is blown powder direct laser deposition. It should be appreciated that any suitable metal deposition (i.e. metal additive) process could be used.

In the foregoing description it has been described that the leading/and or trailing metal edge 6, 8 of a fan blade 2 is repaired. It will be appreciated that the metal tip of the fan blade may also be repaired using the same method. The metal tip of the fan blade may either be formed by the leading/and or trailing metal edge 6, 8 of a fan blade 2 or a separate component may be provided.

In the embodiment described the heatsink has been described as a liquid-cooled heatsink that is cooled with a cooling liquid such as water. However, in other embodiments the heatsink could be cooled by an airflow, either forced or driven by convection.

It has been described that the repair method is for repairing the metal leading or trailing edge 6, 8 of a fan blade 2 for a jet engine. However, the method could be used to repair any metal component adhesively bonded to a composite body. For example, it could be used to repair a metal edge bonded to a composite wing component. Further, the method could be used to repair non-aircraft components, such as a metal part bonded to a composite body component of a car.

## Claims

1. A method of repairing a component having a metal part attached to a composite body, the method comprising:
thermally coupling a heatsink to the metal part adjacent to a repair region of the metal part which is to be repaired; and
performing a metal deposition process on the metal part in the repair region;
wherein during the metal deposition process the heatsink acts to transfer thermal energy away from the metal part caused by the metal deposition process.

2. A method according to claim 1, wherein the heatsink has a heatsink base having a profile corresponding to that of the metal part, wherein thermally coupling the heatsink to the metal part includes placing the heatsink base against the metal part.

3. A method according to claim 2, wherein the heatsink base comprises a recess for receiving the metal part.

4. A method according to claim 3, wherein the recess is in the form of a channel.

5. A method according to any preceding claim, wherein the heatsink is a liquid-cooled heatsink.

6. A method according to claim 5, wherein:
during the metal deposition process a cooling liquid is used to transfer thermal energy away from the heatsink; and/or
during the metal deposition process a cooling liquid is pumped past the heatsink.

7. A method according to any preceding claim, wherein the heatsink defines an opening, and wherein with the heatsink thermally coupled to the metal part, at least a part of the repair region is exposed through the opening.

8. A method according to claim 7, wherein:
the heatsink is thermally coupled to the metal part such that it surrounds at least a part of the repair region; and/or
the metal deposition process is performed through the opening.

9. A method according to any preceding claim, further comprising performing a heat treatment process on the repair region after the metal deposition process, wherein during the heat treatment process the heatsink acts to transfer thermal energy away from the metal part caused by the heat treatment process.

10. A method according to claim 9 when appended to claim 5, wherein:
during the heat treatment process a cooling liquid is used to transfer thermal energy from the heatsink; and/or
during the heat treatment process a cooling liquid is pumped past the heatsink.

11. A method according to claim 9 or claim 10 when appended to claim 7, wherein the heat treatment process is performed through the opening.

12. A method according to any preceding claim, wherein the component is a blade or vane, and wherein the metal part is a metal leading edge, trailing edge or tip.

13. Equipment for repairing a component having a metal part adhesively bonded to a composite body, the equipment comprising:
a heatsink arranged to be thermally coupled to the metal part adjacent to a repair region of the metal part which is to be repaired; and
metal deposition apparatus for performing a metal deposition process on the metal part in the repair region.

14. Equipment according to claim 13, further comprising heat treatment apparatus for performing a heat treatment process on the repair region.

15. A heatsink for use in the method of any of claims 1-12 or the equipment of claim 13 or claim 14.
